# EUROPEAN PATENT APPLICATION

(11) **EP 1 333 607 A2**
(43) Date of publication of application: **06.08.2003**
(21) Application number: 03002233.9
(22) Date of filing: 31.01.2003
(51) Int. Cl.: H04L 1/00

(54) **Apparatus for correcting error of data using channel state information**

(30) Priority: 01.02.2002 KR 2002005912
(71) Applicant: SAMSUNG ELECTRONICS Co. Ltd., Kyungki-do, Seoul (KR)
(72) Inventor: Chang, Yong-deok, Suwon-city, Gyunggi-do (KR)
(74) Representative: Grünecker, Kinkeldey, Stockmair & Schwanhäusser Anwaltssozietät

(57) **Abstract**

An apparatus for correcting error of data can improve recovery performance of an original signal by performing deinterleaving data considering channel state information. In the apparatus for correcting error of data, which corrects error of I and Q symbols equalized by an equalizer that extracts channel state information from data including the I and Q symbols transmitted through a multi-channel so as to compensate transmission distortion of the data, the apparatus includes a soft decision block performing soft decision of the I and Q signals equalized by the equalizer and the I and Q symbols from the channel state information and adding a weighted value corresponding to the channel state information to the I and Q symbols made by soft decision, a bit interleaver performing deinterleaving of the data including the I and Q symbols added with the weighted value, and a trellis decoder performing error correction of the data deinterleaved by the bit deinterleaver so as to decode the data to the original signal.

## Description

The present invention relates to an apparatus for correcting error of data using channel state information, and more particularly, to an apparatus for correcting error of data equalized by an equalizer that extracts channel state information from received data, so as to compensate transmission distortion of data including Inphase(I) signal and Quadrature(Q) signal transmitted through multi-channels.

There are a vestigial sideband (VSB) modulation mode and a coded orthogonal frequency division multiplexing (COFDM) modulation mode in a transmission mode of a broadcasting signal for digital broadcasting. The VSB modulation mode is to transmit the broadcasting signal to a single carrier. The COFDM modulation mode is to multiplex and divide the broadcasting signal and then transmit it through a multi-transmission channel. The VSB modulation mode is a US-oriented digital broadcasting transmission mode and has been adopted in Korea, U.S.A., etc. The COFDM modulation mode is a European-oriented digital broadcasting transmission mode.

A broadcasting signal transmitted from a transmitter is affected by some factors such as white Gaussian noise, change of a transmission path according to a multi-channel environment, and impact noise when passing through a transmission channel. The transmitter performs channel coding of the transmitted broadcasting signal to prevent error of the broadcasting signal affected by the above factors from occurring. Also, a receiver that receives a broadcasting signal to correct error of the broadcasting signal occurring due to the above factors performs error correcting coding (EEC) of the broadcasting signal. The receiver that received the broadcasting signal transmitted on a fading channel extracts channel state information (CSI) obtained in the process of equalizing the channel using the received broadcasting signal and a pilot signal, so that the extracted CSI is used in a bit-interleaved trellis decoder. Thus, bit error rate (BER) having more excellent throughput can be obtained. For application of CSI to the trellis decoder, a symbol deinterleaver and a bit deinterleaver should deinterleave received signal information and channel state information.

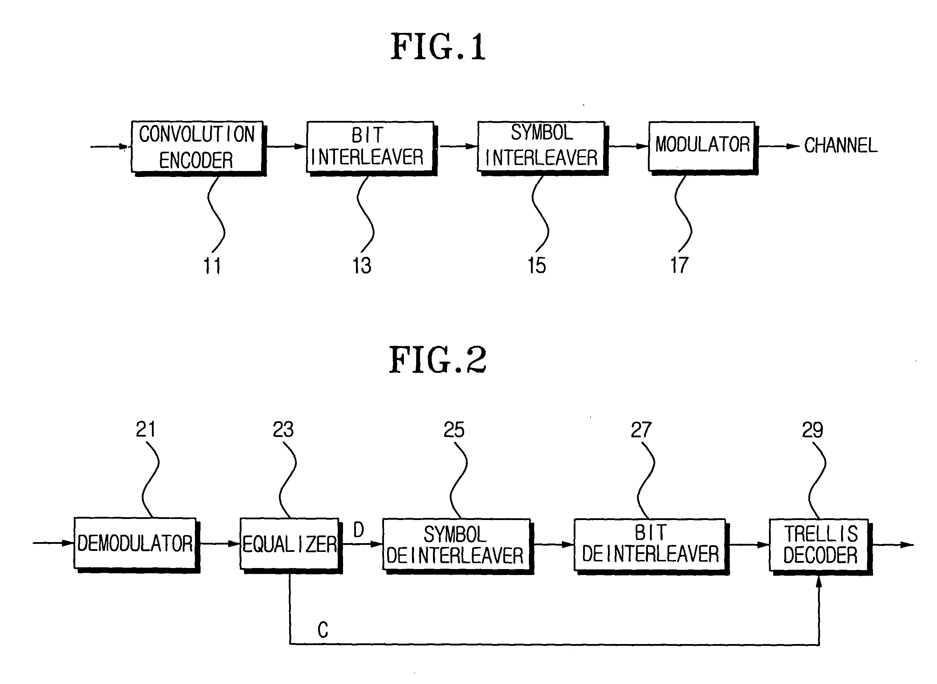

FIG. 1 is a block diagram illustrating a part of a broadcasting signal transmitter that performs interleaving of bits and symbols. The broadcasting signal transmitter includes a convolution encoder 11, a bit interleaver 13, a symbol interleaver 15, and a modulator 17. Hereinafter, the broadcasting signal is called data.

The convolution encoder 11 performs convolution encoding of data to be transmitted for correction of error on a transmission channel. The bit interleaver 13 and the symbol interleaver 15 respectively perform symbol interleaving and bit interleaving to spread data considering a factor such as noise on, for example, a fading channel. The modulator 17 maps and modulates the data output from the symbol interleaver 15 for each unit of symbol. Therefore, the modulated data is transmitted to the receiver through a channel.

FIG. 2 is a block diagram illustrating an example of a broadcasting signal receiver that recovers a broadcasting signal using CSI according to the related art. The broadcasting signal receiver includes a demodulator 21, an equalizer 23, a symbol deinterleaver 25, a bit deinterleaver 27, and a trellis decoder 29.

The demodulator 21 converts the received data to a digital signal and demodulates of data of the transmitter to demodulate the converted data for each unit of symbol. The equalizer 23 compensates transmission distortion of the demodulated symbol. At this time, the equalizer 23 extracts channel state information C from a pilot signal included in a symbol to compensate distortion of data. The symbol deinterleaver 25 performs deinterleaving of symbol data D output from the equalizer and performs soft decision of the deinterleaved symbol data D for each unit of bit. The bit interleaver 27 performs deinterleaving for each unit of bit corresponding to the soft decision symbol data D. The trellis decoder 29 performs error correction of the bit data deinterleaved by the bit deinterleaver 27 using the channel state information C extracted from the equalizer 23, so as to demodulate the received data.

However, the broadcasting receiver according to the related art has several problems.

Since the deinterleaved data is recovered to the original signal using the channel state information C not subject to symbol deinterleaving and bit deinterleaving, the channel state information C is only used for some bits of the bit data respectively spread by deinterleaving. For this reason, the broadcasting signal receiver according to the related art cannot obtain signal recovery effect according to deinterleaving of data, thereby reducing performance of the trellis decoder 29.

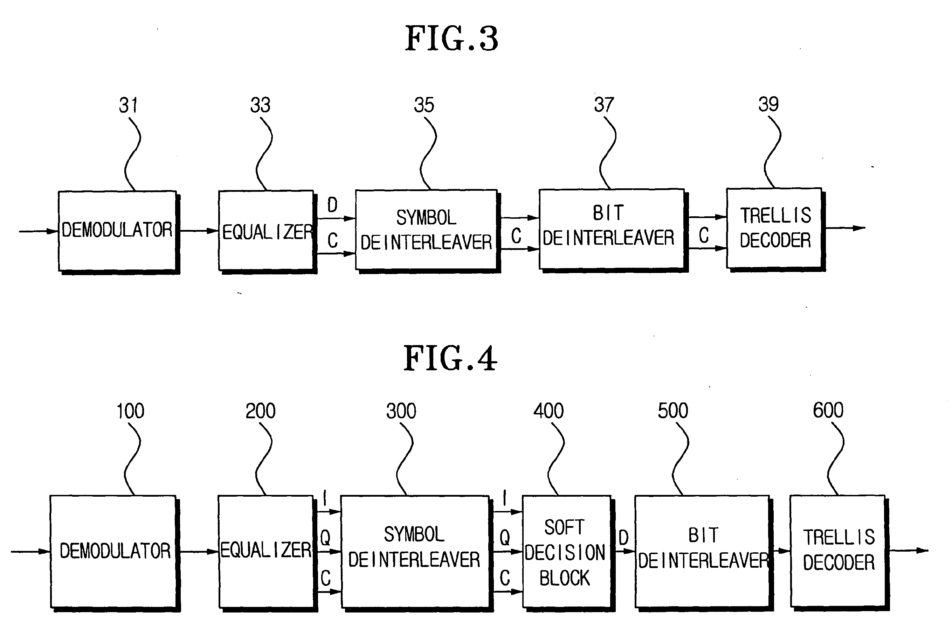

FIG. 3 is a block diagram illustrating another example of a broadcasting signal receiver that recovers a broadcasting signal using CSI according to the related art. The broadcasting signal receiver of FIG. 3 includes a demodulator 31, an equalizer 33, a symbol deinterleaver 35, a bit deinterleaver 37, and a trellis decoder 39.

The demodulator 31 performs the same function as that of the demodulator 21 of FIG. 2. The equalizer 33 compensates transmission distortion of symbol data by extracting channel state information C from a pilot signal included in the symbol data. The symbol deinterleaver 35 divides the symbol data D output from the equalizer, of which distortion is compensated, for each unit of bit in accordance with properties and performs soft decision the symbol data D for each unit of bit. Then, the symbol deinterleaver 35 weights the input channel state information C to perform soft decision of the weighted input channel state information C for each unit of bit. The bit interleaver 37 deinterleaves the soft decision data weighted with the channel state information C for each unit of bit. The trellis decoder 39 performs error correction of the bit data deinterleaved by the bit deinterleaver 37 using the deinterleaved channel state information C, so as to decode the received data.

The channel state information C of the broadcasting receiver of FIG. 3 can improve recovery performance of the original signal by symbol deinterleaving and bit deinterleaving of the symbol deinterleaver 35 and the bit deinterleaver 37. However, the bit deinterleaver 37 has a complicated structure in hardware and increases the production cost and the size to perform bit deinterleaving of the channel state information for each unit of bit.

Accordingly, it is the object of the present invention to provide an apparatus for correcting error of data, which can improve recovery performance of an original signal by performing deinterleaving data considering channel state information.

In accordance with an aspect of the present invention, there is provided an apparatus for correcting error of data, which can improve recovery performance of an original signal by performing deinterleaving data considering channel state information and has a structure which is not complicated in hardware.

To achieve the above object, there is provided an apparatus for correcting error of data, which corrects error of I and Q symbols equalized by an equalizer that extracts channel state information from data including the I and Q symbols transmitted through multi-channels so as to compensate transmission distortion of the data, the apparatus comprising: a soft decision block for performing a soft decision of the I and Q signals equalized by the equalizer and the I and Q symbols from the channel state information, and adding a weighted value corresponding to the channel state information to the I and Q symbols made by soft decision; a bit interleaver for deinterleaving the data including the I and Q symbols added with the weighted value; and a trellis decoder for performing an error correction of the data deinterleaved by the bit deinterleaver so as to decode the data to the original signal.

The soft decision block includes a soft setting block for performing a soft setting of the I and Q symbols for each unit of bit; a weight value adder for adding a predetermined weight to the channel state information to obtain a weighted value; and an adder for adding the weighted value to the I and Q symbols soft set by the soft setting block.

The trellis decoder includes a branch metric generator (BMG) for generating a branch metric which is a difference value between the data deinterleaved by the bit deinterleaver and reference data generated by state transition; an add-compare-select (ACS) block for selecting a survival path and decision bit information corresponding to the survival path by comparing a value, which is obtained by adding the branch metric to a path metric with respect to each state of the state transition, with the branch metric; and a trace back (TB) block for decoding the original signal by performing trace back based on the survival path and the decision bit information.

In another aspect of the present invention, there is provided a data receiver provided with an apparatus for correcting error, comprising a demodulator for converting input data to a digital signal and demodulating the converted data; an equalizer for extracting channel state information of each of I and Q symbols of the demodulated data to equalize the I and Q symbols; a soft decision block for performing soft decision of the I and Q signals from the equalized I and Q symbols and the channel state information and adding a weighted value corresponding to the channel state information to the I and Q symbols obtained by soft decision; a bit interleaver for deinterleaving of the data including the I and Q symbols added with the weighted value; and a trellis decoder for performing an error correction of the data deinterleaved by the bit deinterleaver so as to decode the data to the original signal.

The soft decision block includes a soft setting block for performing soft setting of the I and Q symbols for each unit of bit; a weight value adder for adding a predetermined weight to the channel state information to obtain a weighted value; and an adder for adding the weighted value to the I and Q symbols soft set by the soft setting block.

The trellis decoder includes a branch metric generator (BMG) for generating a branch metric which is a difference value between the data deinterleaved by the bit deinterleaver and reference data generated by state transition; an add-compare-select (ACS) block for selecting a value obtained by adding the branch metric to a path metric with respect to each state of the state transition, a survival path in the branch metric, and decision bit information corresponding to the survival path; and a trace back (TB) block for storing the survival path and the decision bit information and decoding the original signal by performing trace back based on the stored survival path and the decision bit information.

In yet another aspect of the present invention, there is provided a method for correcting error of data, which corrects error of I and Q symbols equalized by an equalizer that extracts channel state information from data including the I and Q symbols transmitted through a multi-channel so as to compensate transmission distortion of the data, the method comprising the steps of: a) performing soft decision of the I and Q signals equalized by the equalizer and the I and Q symbols from the channel state information and adding a weighted value corresponding to the channel state information to the I and Q symbols made by soft decision; b) deinterleaving of the data including the I and Q symbols added with the weighted value for each unit of bit; and c) performing an error correction of the data deinterleaved by the bit deinterleaver so as to decode the data to the original signal.

The step a) includes the steps of: a1) performing soft setting of the I and Q symbols for each unit of bit; a2) adding a predetermined weight to the channel state information to obtain a weighted value; and a3) adding the weighted value to the I and Q symbols soft set in the step al).

The step c) includes the steps of: c1) generating a branch metric which is a difference value between the data and reference data generated by state transition; c2) selecting a survival path and decision bit information corresponding to the survival path by comparing a value, which is obtained by adding the branch metric to a path metric with respect to each state of the state transition, with the branch metric; and c3) decoding the original signal by performing trace back based on the survival path and the decision bit information.

In the preferred embodiment of the present invention, the soft decision block performs soft decision of the I and Q symbols and the bit deinterleaver performs deinterleaving of the I and Q symbols made by soft decision added with the weighted value of the channel state information for each unit of bit, signal processing load according to deinterleaving of the bit deinterleaver can be reduced. The trellis decoder can improve recovery performance of the original signal according to error correction.

In addition, since the soft decision block performs soft decision of data considering the channel state information, the bit deinterleaver does not have to separately perform deinterleaving of the channel state information. As a result, a structure which is not complicated in hardware can be obtained and the production cost can be reduced.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a block diagram illustrating a broadcasting signal transmitter that performs interleaving of bits and symbols;
FIG. 2 is a block diagram illustrating an example of a broadcasting signal receiver that recovers a broadcasting signal using channel state information according to the related art;
FIG. 3 is a block diagram illustrating another example of a broadcasting signal receiver that recovers a broadcasting signal using channel state information according to the related art;
FIG. 4 is a block diagram illustrating a broadcasting signal receiver that performs error correction of data using channel state information according to the preferred embodiment of the present invention;
FIG. 5 is a detailed block diagram illustrating a soft decision block of FIG. 4;
FIGS. 6A to 6D illustrate properties for each bit of I and Q symbols according to a soft decision block of FIG. 5;
FIG. 7 is a detailed block diagram illustrating a trellis decoder of FIG. 4;
FIG. 8 is a flow chart illustrating a method for correcting error of data using an apparatus for correcting error according to the preferred embodiment of the present invention;
FIG. 9 is a detailed flow chart illustrating the soft decision step of FIG. 8; and
FIG. 10 is a detailed flow chart illustrating the original signal recovery step of FIG. 8.

An apparatus for correcting data in accordance with preferred embodiments of the present invention will now be described in detail with reference to the accompanying drawings.

FIG. 4 is a block diagram illustrating a broadcasting signal receiver that performs error correction of data using channel state information according to the preferred embodiment of the present invention. The broadcasting signal receiver includes a demodulator 100, an equalizer 200, a symbol deinterleaver 300, a soft decision block 400, a bit deinterleaver 500, and a trellis decoder 600.

The demodulator 100 converts received data to a digital signal and reversely performs modulation of data of the transmitter to demodulate the converted data for each unit of symbol. The equalizer 200 compensates transmission distortion of the demodulated symbol data. At this time, the equalizer 200 extracts channel state information C of the symbol data using a pilot signal to compensate transmission distortion of I and Q signals of the symbol data. The symbol deinterleaver 300 performs deinterleaving of I and Q symbols corresponding to the I and Q signals equalized by the equalizer 200 and of the channel state information C extracted by the equalizer 200.

The soft decision block 400 performs soft decision of the I and Q signals deinterleaved by the symbol deinterleaver 300 for each unit of bit. The soft decision block 400 also adds a weighted value corresponding to the channel state information C deinterleaved by the symbol deinterleaver 300 to the data obtained by soft decision. The bit interleaver 500 performs deinterleaving of the data added with the weighted value output from the soft decision block 400 for each unit of bit. The trellis decoder 600 performs error correction of the data deinterleaved by the bit deinterleaver 500 so as to recover the original signal.

The bit deinterleaver 500 performs soft decision of the I and Q symbols and deinterleaves the data with the weighted value corresponding to the channel state information C added to the I and Q symbols made by soft decision, so that the trellis decoder 600 can improve recovery performance of the original signal of the data.

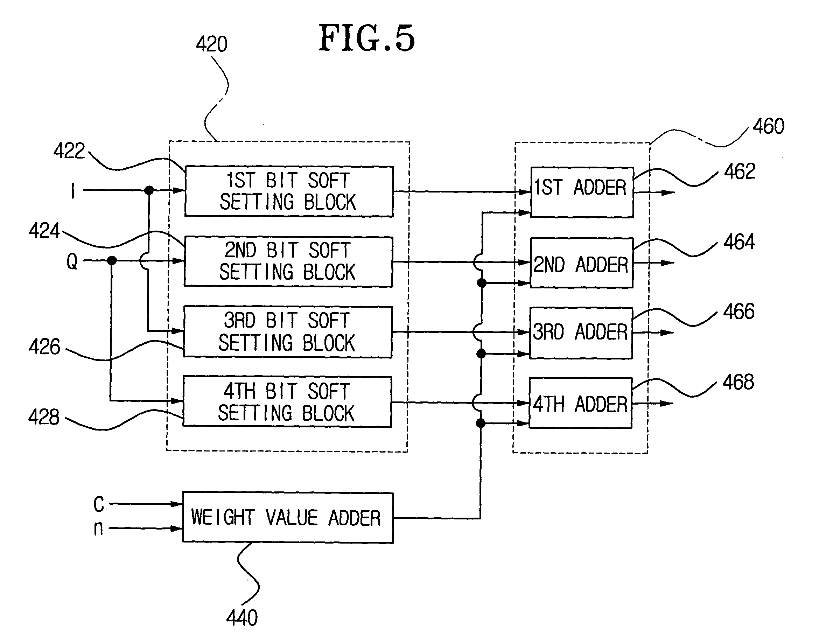

FIG. 5 is a detailed block diagram illustrating the soft decision block 400 of FIG. 4. The soft decision block 400 includes a soft setting block 420, a weighted value adder 440, and an adder 460.

The soft setting block 420 performs soft setting of the I and Q symbols output from the symbol deinterleaver 300 for each unit of bit. Preferably, the soft setting block 420 has a plurality of bit soft setting blocks corresponding to the I and Q symbols for each unit of bit. In FIG. 5, it is noted that the soft setting block 420 has four bit soft setting blocks 422, 424, 426, and 428 when the I and Q symbols are a four-bit unit.

The weight value adder 440 multiplies the weighted value n set in the channel state information C deinterleaved by the symbol deinterleaver 300 to obtain a weighted value. The adder 460 adds the weighted value obtained by the weighted value adder 440 to the I and Q symbols soft set by the soft setting block 420. In FIG. 5, the adder 460 includes four adders 462, 464, 466, and 468 corresponding to four bit soft setting blocks 422, 424, 426, and 428 so that the weighted value is added to each of the I and Q signals of four-bit unit.

Since the soft decision block 400 performs interleaving the soft set I and Q symbols added with the weighted value corresponding to the channel state information C, signal processing load according to deinterleaving of the bit deinterleaver 500 can be reduced.

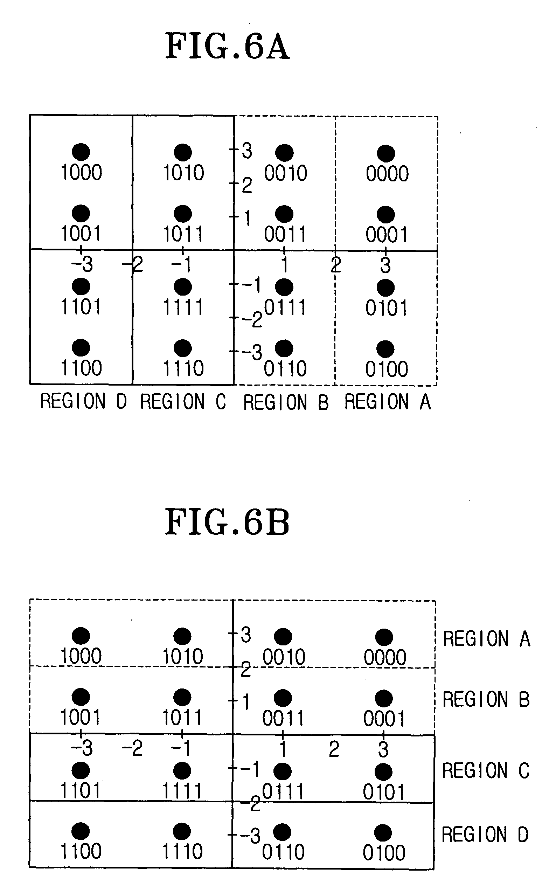

FIGS. 6A to 6D illustrate properties for each bit of the I and Q symbols according to soft decision of the soft decision block 400 of FIG. 5.

The soft decision block 400 assigns a region corresponding to each bit of the I and Q symbols mapped using the channel state information C. Then, the soft decision block 400 sets each grouping of '0' and '1' for each bit of the I and Q symbols and divides the set grouping into each region.

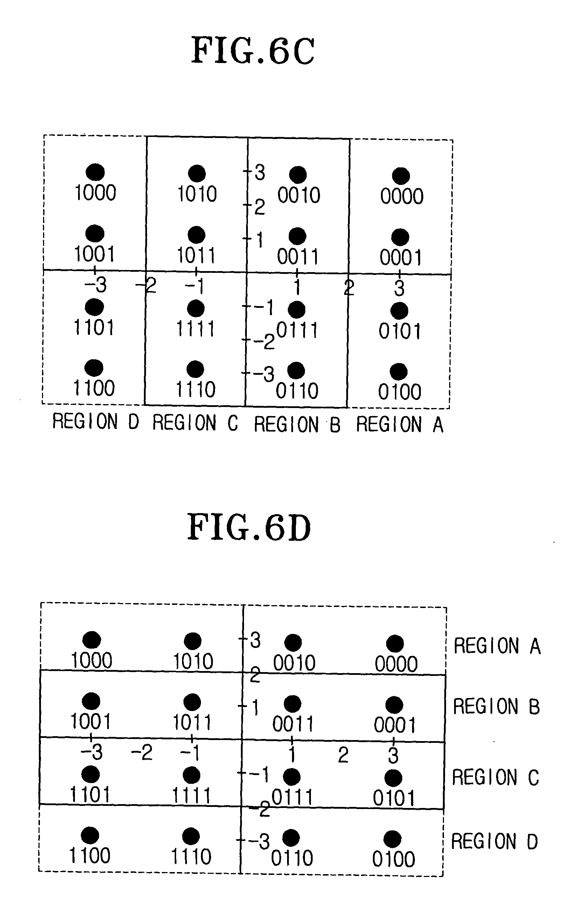

FIG. 6A illustrates a grouping state divided into '0' and '1' using a solid line and a dotted line for the first bit of the symbol, and FIG. 6B illustrates a grouping state divided into '0' and '1' using a solid line and a dotted line for the second bit of the symbol, FIG. 6C illustrates a grouping state divided into '0' and '1' using a solid line and a dotted line for the third bit of the symbol, and FIG. 6D illustrates a grouping state divided into '0' and '1' using a solid line and a dotted line for the fourth bit of the symbol.

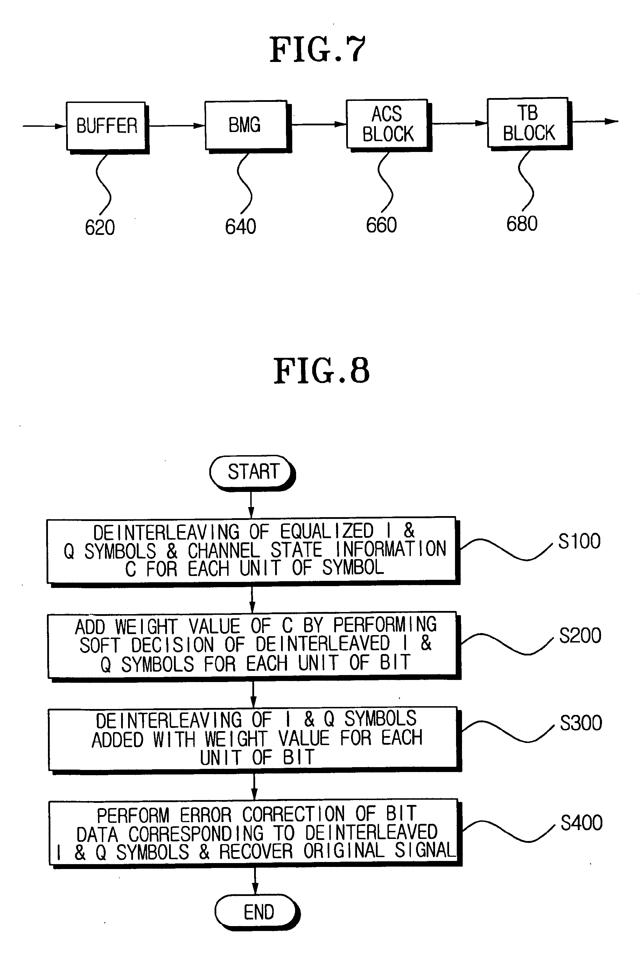

FIG. 7 is a detailed block diagram illustrating the trellis decoder 600 of FIG. 4. The trellis decoder 600 includes a buffer 620, a branch metric generator (BMG) 640, an add-compare-select (ACS) block 660, and a trace back (TB) block 680.

The buffer 620 sequentially stores data output from the bit deinterleaver 500 and sequentially outputs the stored data to the BMG 640. The BMG 640 generates a branch metric which is a difference value between the data output from the buffer 620 and reference data generated by state transition.

The ACS block 660 performs adding operation of the branch metric and a path metric for each state according to the state transition of the reference data. Also, the ACS block 660 compares the branch metric with the path metric and selects a smaller one. At this time, the selected value represents a survival path for a corresponding symbol. At the same time, the ACS block 660 selects decision bit information corresponding to the selected survival path.

The TB block 680 stores the survival path and the decision bit information selected by the ACS block 660. The TB block 680 also recovers the original signal by performing trace back based on the survival path and the decision bit information.

Consequently, the trellis decoder 600 recovers the value obtained by bit deinterleaving the data added with the weighted value of the channel state information to the original signal, thereby improving recovery performance of the original signal.

FIG. 8 is a flow chart illustrating a method for correcting error of data using the apparatus for correcting error according to the preferred embodiment of the present invention.

The symbol deinterleaver 400 deinterleaves the I and Q symbols equalized by the equalizer and the channel state information C provided from the equalizer for each unit of symbol (S100). The soft decision block 400 performs soft decision of the I and Q symbols deinterleaved by the symbol deinterleaver 300 for each unit of bit (S200). The soft decision block 400 also adds a weight to the channel state information C to obtain a weighted value, and adds the obtained weighted value to each of the I and Q symbols made by soft decision.

The bit deinterleaver 500 deinterleaves the I and Q symbols added with the weighted value in the soft decision block 400 for each unit of bit (S300). The trellis decoder 600 corrects error of bit data corresponding to the I and Q symbols deinterleaved for each unit of bit and recovers the corrected data to the original signal (S400).

Consequently, the trellis decoder 600 recovers the original signal by error correction through the bit data considering the channel state information C, thereby improving recovery performance of the original signal.

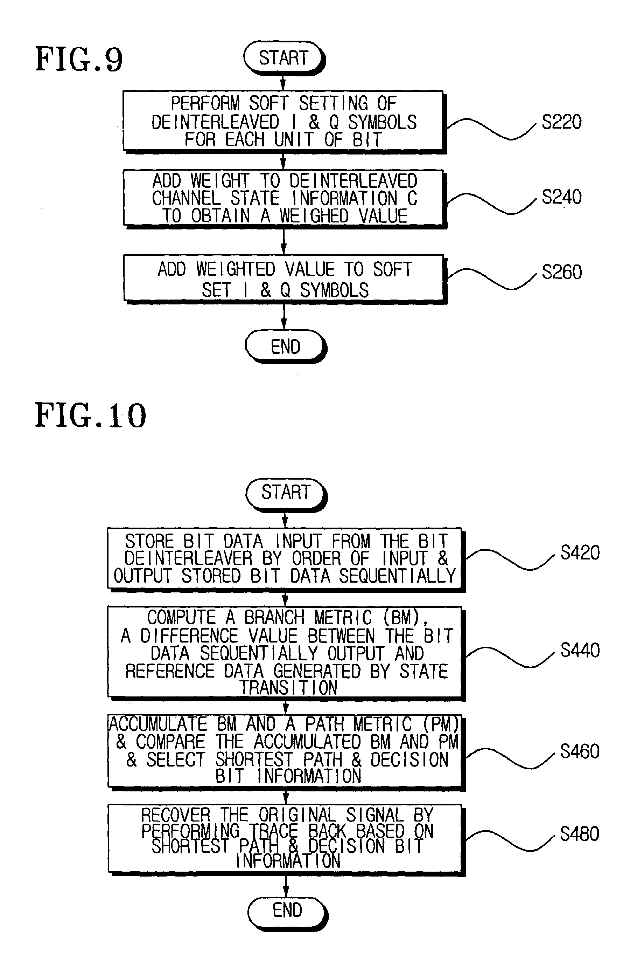

FIG. 9 is a detailed flow chart illustrating the soft decision step (S200) of FIG. 8. The soft setting block 420 performs soft setting of the I and Q symbols deinterleaved by the symbol deinterleaver 300 for each unit of bit (S220). Meanwhile, the weighted value adder 440 adds a weight n set in the channel state information C deinterleaved by the symbol deinterleaver 300 to obtain the weighted value (S240). Then, the adder 460 adds the weighted value obtained by the weighted value adder 440 to each of the I and Q symbols soft set by the soft setting block 420 (S260). Thus, the soft decision block 400 can deinterleave the deinterleaved I and Q symbols considering the channel state information C.

FIG. 10 is a detailed flow chart illustrating the original signal recovery step (S400) of FIG. 8. The buffer 620 sequentially stores bit data output from the bit deinterleaver 500 (S420). Also, the buffer 620 sequentially outputs the stored bit data to the BMG 640. The BMG 640 generates a branch metric (BM) which is a difference value between the bit data sequentially output from the buffer 620 and reference data generated by state transition (S440).

The ACS block 660 accumulates and stores the branch metric obtained by the BMG 640 and a path metric (PM) (S460). Also, the ACS block 660 compares the accumulated branch metric and path metric with a new branch metric and selects a smaller one as a survival path. The ACS block 660 selects decision bit information corresponding to the selected survival path and provides the selected decision bit information to the TB block 680. The TB block 680 stores the survival path and the decision bit information selected by the ACS block 660 and recovers the original signal by performing trace back based on the survival path and the decision bit information after the lapse of a predetermined time period (S480).

Consequently, the trellis decoder 600 recovers the original signal by performing trace back based on the survival path and the decision bit information of the bit data considering the channel state information, thereby improving recovery performance of the original signal according to error correction.

In the aforementioned embodiment of the present invention, the apparatus for correcting error of data based on digital video broadcast via terrestrial (DVBT) standard using OFDM or VSB has been described. Therefore, the apparatus for correcting error of data according to the present invention includes the symbol deinterleaver 300 and the bit deinterleaver 500. However, the embodiment of the present invention is applicable to the apparatus for correcting error of data, which includes the soft decision block 400 without including the symbol deinterleaver 300, like the radio communication standard.

The apparatus for correcting error of data according to the present invention has the following advantages.

Since the soft decision block performs soft decision of the I and Q symbols and the bit deinterleaver performs deinterleaving of the I and Q symbols made by soft decision added with the weighted value of the channel state information for each unit of bit, signal processing load according to deinterleaving of the bit deinterleaver can be reduced. The trellis decoder can improve recovery performance of the original signal according to error correction.

In addition, since the soft decision block performs soft decision of data considering the channel state information, the bit deinterleaver does not have to separately perform deinterleaving of the channel state information. As a result, a structure which is not complicated in hardware can be obtained and the production cost can be reduced.

## Claims

1. An apparatus for correcting error of data, which corrects error of I and Q symbols equalized by an equalizer (200) that extracts channel state information from data including the I and Q symbols transmitted through multi-channels so as to compensate transmission distortion of the data, the apparatus comprising:
a soft decision block (400) for performing a soft decision of the I and Q signals equalized by the equalizer and the I and Q symbols from the channel state information, and adding a weighted value corresponding to the channel state information to the I and Q symbols made by soft decision;
a bit interleaver (500) for deinterleaving the data including the I and Q symbols added with the weighted value; and
a trellis decoder (600) for performing an error correction of the data deinterleaved by the bit deinterleaver so as to decode the data to the original signal.

2. The apparatus according to claim 1, wherein the soft decision block comprises:
a soft setting block (420) for performing a soft setting of the I and Q symbols for each unit of bit;
a weight value adder (440) for adding a predetermined weight to the channel state information to obtain a weighted value; and
an adder (460) for adding the weighted value to the I and Q symbols soft set by the soft setting block.

3. The apparatus according to claim 1, wherein the trellis decoder comprises:
a branch metric generator (BMG) (640) for generating a branch metric which is a difference value between the data deinterleaved by the bit deinterleaver and reference data generated by state transition;
an add-compare-select (ACS) block (660) for selecting a survival path and decision bit information corresponding to the survival path by comparing a value, which is obtained by adding the branch metric to a path metric with respect to each state of the state transition, with the branch metric; and
a trace back (TB) block (680) for decoding the original signal by performing trace back based on the survival path and the decision bit information.

4. The apparatus according to claim 3, wherein the trellis decoder further comprises a buffer (620) for sequentially storing the data deinterleaved by the bit deinterleaver and sequentially outputting the stored data to the BMG.

5. The apparatus according to claim 1, further comprising a symbol deinterleaver (300) for deinterleaving of I and Q symbols corresponding to the I and Q signals equalized by the equalizer and of the channel state information extracted by the equalizer, wherein the soft decision block adds a weighted value corresponding to the channel state information deinterleaved by the symbol deinterleaver to the I and Q symbols deinterleaved for each unit of symbol.

6. A data receiver provided with an apparatus for correcting error, comprising:
a demodulator (100) for converting input data to a digital signal and demodulating the converted data;
an equalizer (200) for extracting channel state information of each of I and Q symbols of the demodulated data to equalize the I and Q symbols;
a soft decision block (400) for performing soft decision of the I and Q signals from the equalized I and Q symbols and the channel state information and adding a weighted value corresponding to the channel state information to the I and Q symbols obtained by soft decision;
a bit interleaver (500) for deinterleaving of the data including the I and Q symbols added with the weighted value; and
a trellis decoder (600) for performing an error correction of the data deinterleaved by the bit deinterleaver so as to decode the data to the original signal.

7. The data receiver according to claim 6, wherein the soft decision block comprising:
a soft setting block (420) for performing soft setting of the I and Q symbols for each unit of bit;
a weight value adder (440) for adding a predetermined weight to the channel state information to obtain a weighted value; and
an adder for adding (460) the weighted value to the I and Q symbols soft set by the soft setting block.

8. The data receiver according to claim 7, wherein the trellis decoder comprises:
a branch metric generator (BMG) (640) for generating a branch metric which is a difference value between the data deinterleaved by the bit deinterleaver and reference data generated by state transition;
an add-compare-select (ACS) block (660) for selecting a value obtained by adding the branch metric to a path metric with respect to each state of the state transition, a survival path in the branch metric, and decision bit information corresponding to the survival path; and
a trace back (TB) block (680) for storing the survival path and the decision bit information and decoding the original signal by performing trace back based on the stored survival path and the decision bit information.

9. The data receiver according to claim 8, wherein the trellis decoder further comprises a buffer (620) for sequentially storing the data deinterleaved by the bit deinterleaver and sequentially outputting the stored data to the BMG.

10. The data receiver according to claim 1, further comprising a symbol deinterleaver (300) for deinterleaving of I and Q symbols corresponding to the I and Q signals equalized by the equalizer and of the channel state information extracted by the equalizer, wherein the soft decision block adds a weighted value corresponding to the channel state information deinterleaved by the symbol deinterleaver to the I and Q symbols deinterleaved for each unit of symbol.

11. A method for correcting error of data, which corrects error of I and Q symbols equalized by an equalizer that extracts channel state information from data including the I and Q symbols transmitted through a multi-channel so as to compensate transmission distortion of the data, the method comprising the steps of:
a) performing soft decision of the I and Q signals equalized by the equalizer and the I and Q symbols from the channel state information and adding a weighted value corresponding to the channel state information to the I and Q symbols made by soft decision;
b) deinterleaving of the data including the I and Q symbols added with the weighted value for each unit of bit; and
c) performing an error correction of the data deinterleaved by the bit deinterleaver so as to decode the data to the original signal.

12. The method according to claim 11, wherein the step a) comprises the steps of:
a1) performing soft setting of the I and Q symbols for each unit of bit;
a2) adding a predetermined weight to the channel state information to obtain a weighted value; and
a3) adding the weighted value to the I and Q symbols soft set in the step a1).

13. The method according to claim 12, wherein the step c) comprising the steps of:
c1) generating a branch metric which is a difference value between the data and reference data generated by state transition;
c2) selecting a survival path and decision bit information corresponding to the survival path by comparing a value, which is obtained by adding the branch metric to a path metric with respect to each state of the state transition, with the branch metric; and
c3) decoding the original signal by performing trace back based on the survival path and the decision bit information.

14. The method according to claim 13, wherein the step c) further comprises the step of sequentially storing the data and sequentially outputting the stored data.
